# EUROPÄISCHE PATENTSCHRIFT

(11) **EP 3 538 777 B1**
(45) Veröffentlichungstag und Bekanntmachung des Hinweises auf die Patenterteilung: **08.06.2022**
(21) Anmeldenummer: 17794684.5
(22) Anmeldetag: 19.10.2017
(51) Int. Cl.: F16B 37/08, B60Q 1/068

(54) **EINSTELLVORRICHTUNG**
ADJUSTING DEVICE
DISPOSITIF DE RÉGLAGE

(30) Priorität: 11.11.2016 DE 102016222197
(43) Veröffentlichungstag der Anmeldung: 18.09.2019
(73) Patentinhaber: EJOT SE & Co. KG, 57319 Bad Berleburg (DE)
(72) Erfinder: LAUBER, Marcus, 57319 Bad Berleburg (DE); PETER, Ralf, 57319 Bad Berleburg (DE); HENTSCHEL, Andreas, 42551 Velbert (DE)
(74) Vertreter: Bardehle Pagenberg Partnerschaft mbB Patentanwälte Rechtsanwälte
(86) Internationale Anmeldenummer: PCT/EP2017/076695
(87) Internationale Veröffentlichungsnummer: WO 2018/086838

(56) Entgegenhaltungen:
- DE-A1- 1 497 363
- DE-A1- 19 843 218
- DE-A1- 19 915 632
- DE-C- 830 717
- GB-A- 1 495 607
- JP-A- S60 161 212

## Beschreibung

Die vorliegende Erfindung betrifft eine Einstellvorrichtung zum Einstellen einer Position eines Scheinwerfers, einen entsprechenden Scheinwerfer und ein Verfahren zum Anordnen der Einstellvorrichtung an einer Stellschraube.

Damit der Lichtkegel eines Scheinwerfers eines Kraftfahrzeugs im richtigen Winkel die Straße ausleuchtet, weisen die Scheinwerfer einen Verstellmechanismus auf. Mit diesem Verstellmechanismus kann der Lichtkegel des Scheinwerfers entweder manuell oder automatisch verstellt werden.

Ein wesentliches Teil des Verstellmechanismus ist die sogenannte Einstellvorrichtung. Die Einstellvorrichtung ist derart ausgestaltet, dass sie eine Bewegung einer Stellschraube auf den Scheinwerfer überträgt. Dafür weist die Einstellvorrichtung ein Halteelement auf, welches bewirkt, dass durch eine Drehung der Stellschraube die Einstellvorrichtung axial entlang der Stellschraube in die eine oder die andere Richtung bewegt wird. Die Einstellvorrichtung weist darüber hinaus noch ein Übertragungselement auf, mit dem die Bewegung auf den Scheinwerfer übertragen und somit die Ausrichtung des Scheinwerfers verändert wird. Ein Scheinwerfer mit einem verstellbaren Reflektor ist beispielsweise in DE 1 497 363 beschrieben.

Der Verstellmechanismus soll günstig in der Herstellung, einfach in der Montage und verlässlich im Betrieb sein. Darüber hinaus soll der Verstellmechanismus universell einsetzbar sein, d.h. in einer Vielzahl verschiedener Kraftfahrzeuge für unterschiedliche Arten von Scheinwerfern.

Der Erfindung liegt die Aufgabe zugrunde eine Einstellvorrichtung, einen Scheinwerfer und ein entsprechendes Verfahren bereitzustellen, mit denen ein derartiger Verstellmechanismus realisiert werden kann.

Diese Aufgabe wird durch die Gegenstände der unabhängigen Ansprüche gelöst. Bevorzugte Ausführungsformen ergeben sich aus den Unteransprüchen.

Die Erfindung umfasst eine Einstellvorrichtung zum Einstellen einer Position eines Scheinwerfers. Insbesondere wird ein Element des Scheinwerfers derart bewegt, dass sich die Position des Lichtkegels des Scheinwerfers ändert. Die Einstellvorrichtung weist unter anderem zwei Elemente auf, ein Halteelement und ein Übertragungselement. Das Halteelement ist ausgestaltet, um die Einstellvorrichtung an einer Stellschraube zu halten. Das Übertragungselement ist ausgestaltet, um die Position des Scheinwerfers in Abhängigkeit von der Position des Halteelements an der Stellschraube zu ändern. Das Übertragungselement überträgt also die Bewegung der Stellschraube auf den Scheinwerfer. Hierfür ist das Übertragungselement direkt oder indirekt mit dem Scheinwerfer verbunden. Beispielsweise kann das Übertragungselement mit einem Reflektor oder einer Lichtquelle des Scheinwerfers oder mit einem Tragrahmen für den Reflektor oder die Lichtquelle verbunden sein. Erfindungsgemäß weist das Haltelement mindestens zwei Teile auf. Diese mindestens zwei Teile sind relativ zueinander bewegbar. Außerdem umschießen die mindestens zwei Teile die Querschnittsfläche der Stellschraube zumindest teilweise. Das Haltelement kann beispielsweise einen c-förmigen Querschnitt aufweisen, der mehr als die Hälfte des Umfangs der Stellschraube umschließt.

Gemäß der vorliegenden Erfindung ist an jeweils einem der mindestens zwei Teile ein Bewegungsmittel angeordnet, das derart bewegt werden kann, dass sich die mindestens zwei Teile voneinander weg bewegen, um das Halteelement der Einstellvorrichtung an der Stellschraube anzuordnen. Das Bewegungsmittel kann aber auch derart bewegt werden, dass sich die mindestens zwei Teile zueinander hin bewegen, damit die mindestens zwei Teile des Halteelements die Einstellvorrichtung an der Stellschraube halten. Bei der Montage der Einstellvorrichtung wirkt das Bewegungsmittel wie ein Hebelarm. Dadurch wird bei der Montage eine geringere Kraft benötigt, um die Einstellvorrichtung an der Stellschraube zu montieren.

Diese Kraft ist insbesondere geringer im Vergleich zu der Kraft, die bisher notwendig war, um das Haltelement der Einstellvorrichtung auf die Stellschraube zu schieben. Diese Art der Montage hatte darüber hinaus den Nachteil, dass das Profil auf der Stellschraube sowie das Haltelement bei der Montage hohen mechanischen Belastungen ausgesetzt waren. Bei der erfindungsgemäßen Lösung sind diese mechanischen Belastungen wesentlich geringer, weil die mindestens zwei Teile des Halteelements mit Hilfe des Bewegungsmittels voneinander weg und zueinander hin bewegt werden. Das Bewegungsmittel ermöglicht ein einfaches und kontrolliertes Öffnen und Schließen des Haltelements, so dass die Einstellvorrichtung schnell, genau und ohne Beschädigung der Stellschraube platziert werden kann. Da die Stellschraube und die Einstellvorrichtung bei der Montage nicht mehr derart hohen Kräften ausgesetzt sind, können sie auch günstiger hergestellt werden.

Das Haltelement kann auf unterschiedlichste Arten realisiert werden. Vorzugsweise ist das Halteelement derart ausgestaltet, dass es sich bei einer Drehung der Stellschraube aufgrund des an der Stellschraube angeordneten Profils entlang der Stellschraube bewegt. Dabei bewegt sich das Haltelement vorzugsweise in Abhängigkeit von der Richtung der Drehung der Stellschraube in unterschiedliche Richtungen entlang der Stellschraube. Hierfür weist das Haltelement vorzugsweise an mindestens einem der mindestens zwei Teile mindestens ein Gewindeelement auf.

Das Halteelement besteht vorzugsweise aus Kunststoff. Außerdem ist das Haltelement vorzugsweise derart beschaffen, dass die mindestens zwei Teile unter Verformung des Haltelements auseinander, d.h. voneinander weg gebogen werden können. Diese Beschaffenheit des Halteelements kann auch während dem Betrieb der Einstellvorrichtung hilfreich sein, um beispielsweise eine Art Rutschkupplung bzw. Überrastkupplung zu realisieren. Wenn auf die Einstellvorrichtung ein hohes Drehmoment wirkt, beispielsweise weil das Halteelement an einem Anschlag der Stellschraube anliegt, kann durch ein Auffedern des Halteelements das Halteelement über das Profil der Stellschraube rutschen, ohne dieses zu beschädigen.

Gemäß einer bevorzugten Ausführungsform der vorliegenden Erfindung sind die mindestens zwei Teile des Haltelements über ein Verbindungselement miteinander verbunden. Vorzugsweise ist dieses Verbindungselement derart ausgestaltet, dass sich beim voneinander weg oder zueinander hin bewegen der mindestens zwei Teile dieses Verbindungselement verändert, während die mindestens zwei Teile sich nicht verändern. Dieses Verbindungselement ist vorzugsweise ein Element, das mit einer geringeren Kraft gebogen werden kann, als die Kraft, die notwendig wäre das Halteelement bzw. eines der mindestens zwei Teile zu verformen. Das Verbindungselement kann auf unterschiedliche Arten ausgestaltet sein. Es hat im Wesentlichen die Funktion eines Scharniers. Es kann beispielsweise dadurch gebildet werden, dass das Halteelement an dieser Stelle eine dünnere Wand aufweist oder sich das Halteelement nur ein kurzes Stück entlang der Stellschraube erstreckt. Ein Beispiel für ein derartiges Verbindungselement ist eine Art Filmscharnier. Aber auch andere Elemente, die in dem Bereich zwischen den mindestens zwei Teilen angeordnet sind und das Bewegen eines Teils relativ zu dem anderen Teil ermöglichen, sind Verbindungselemente im Sinne der vorliegenden Erfindung.

Vorzugsweise ist die erfindungsgemäße Einstellvorrichtung auch derart ausgestaltet, dass sich die mindestens zwei Teile des Halteelements nicht unbeabsichtigt voneinander weg bewegen können. Hierfür wird vorzugsweise ein Sicherungsmittel verwendet. Dieses Sicherungsmittel kann ein Teil der Einstellvorrichtung sein. Das Sicherungsmittel kann aber auch ein Teil sein, das bei der Montage der Einstellvorrichtung an der Einstellvorrichtung angeordnet wird. Das Sicherungsmittel ist vorzugweise derart ausgestaltet, dass es ein Bewegen des Bewegungsmittels in mindestens eine Richtung verhindert. Wenn die Einstellvorrichtung ein Verbindungselement aufweist, wird durch das Sicherungsmittel die Funktion des Verbindungselements außer Kraft gesetzt.

Erfindungsgemäß weist die Einstellvorrichtung zwei Bewegungsmittel auf, wobei ein Bewegungsmittel jeweils an einem Teil des Haltelements angeordnet ist. Die beiden Bewegungsmittel sind derart ausgestaltet, dass sie auf einfache Weise verwendet werden können, um die beiden Teile voneinander weg oder zueinander hin zu bewegen. Die zwei Bewegungsmittel sind derart an den mindestens zwei Teilen angeordnet, dass durch eine Bewegung der zwei Bewegungsmittel zueinander hin, die mindestens zwei Teile voneinander weg bewegt werden. Beispielsweise können die beiden Bewegungsmittel derart ausgestaltet sein, dass sie auf einfache Weise mit zwei Fingern zusammen gedrückt werden können, um die mindestens zwei Teile voneinander weg zu bewegen.

In einer weiter bevorzugten Ausführungsform sind die zwei Bewegungsmittel derart ausgestaltet, dass ein Sicherungsmittel zwischen den zwei Bewegungsmitteln angeordnet werden kann, um eine Bewegung der beiden Bewegungsmittel zu einander hin zu verhindern.

Vorzugsweise sind die beiden Außenseiten der Bewegungsmittel, d.h. die beiden Seiten, die jeweils von dem anderen Bewegungsmittel abgewandt sind, ausgestaltet, um von zwei Fingern oder anderen geeigneten Mitteln zusammengedrückt zu werden. Die Innenseiten der Bewegungsmittel sind vorzugsweise derart ausgestaltet, dass sie etwas aufnehmen können, was das zueinander hin bewegen der Bewegungsmittel verhindert. In einer weiteren bevorzugten Ausführungsform bilden die zwei Bewegungsmittel zumindest teilweise das Übertragungselement. Weiter bevorzugt ist das Übertragungselement mit den zwei Bewegungsmitteln derart ausgestaltet, dass das Übertragungselement ein Element des Scheinwerfers aufnehmen kann und dieses Element des Scheinwerfers eine Bewegung der zwei Bewegungsmittel zueinander hin verhindert. Beispielsweise können die Innenseiten der Bewegungsmittel derart ausgestaltet sein, dass sie ein Element des Scheinwerfers aufnehmen können. Dies hat den Vorteil, dass automatisch mit dem Verbinden der Einstellvorrichtung mit dem Scheinwerfer, das Halteelement an der Stellschraube gesichert wird.

In einer weiter bevorzugten Ausführungsform weist mindestens eines der beiden Teile des Halteelements an einem äußeren Ende mindestens eine Ausrichthilfe auf. Diese mindestens eine Ausrichthilfe ist derart ausgebildet und angeordnet, dass wenn das Halteelement an der Stellschraube angeordnet wird, die Ausrichthilfe ein Ausrichten des Halteelements und somit der gesamten Einstellvorrichtung zu dem Profil an der Stellschraube bewirkt. Dadurch kann sichergestellt werden, dass das Halteelement bestimmungsgemäß an der Stellschraube angeordnet wird.

Die Erfindung umfasst auch einen Scheinwerfer mit einer Einstellvorrichtung. Der Scheinwerfer weist ein Element auf, das mit dem Übertragungselement der Einstellvorrichtung derart verbunden werden kann, dass ein Ändern der Position des Halteelements der Einstellvorrichtung an einer Stellschraube ein Ändern der Position des Scheinwerfers bewirkt.

Die Erfindung umfasst auch ein Verfahren zum Anordnen einer Einstellvorrichtung in einem Verstellmechanismus für einen Scheinwerfer gemäß Anspruch 12.

Die Erfindung wird nachfolgend anhand eines in den beigefügten Zeichnungen dargestellten Ausführungsbeispiels näher erläutert. Aus dem beschriebenen Ausführungsbeispiel ergeben sich weitere Einzelheiten, Merkmale und Vorteile des Gegenstands der Erfindung. Es zeigen:
- Fig. 1: eine perspektivische Ansicht einer Ausführungsform der Einstellvorrichtung;
- Fig. 2: einen Vertikalschnitt durch die in Figur 1 gezeigte Ausführungsform der Einstellvorrichtung; und
- Fig. 3a - 3b: den Ablauf der Montage der Einstellvorrichtung in einem Verstellmechanismus.

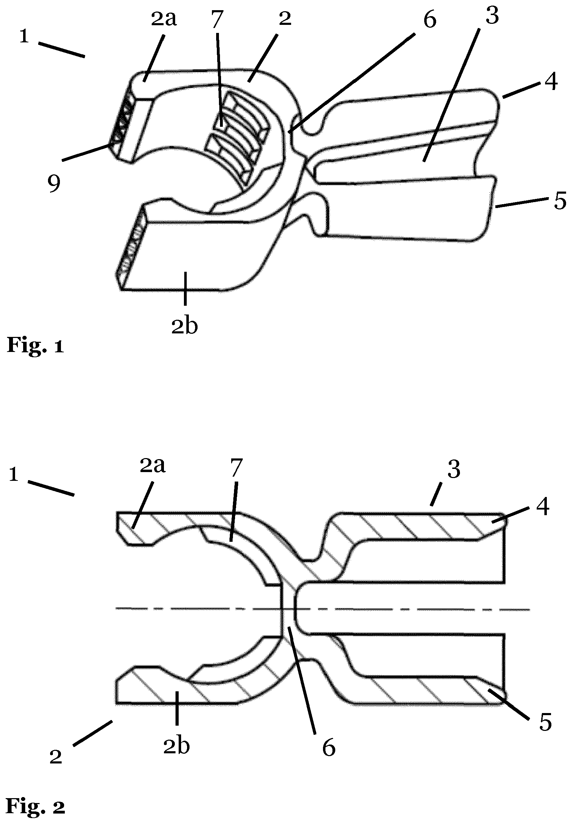

Figur 1 zeigt eine perspektivische Ansicht einer Ausführungsform der erfindungsgemäßen Einstellvorrichtung 1. Die Einstellvorrichtung 1 weist ein Halteelement 2 und ein Übertragungselement 3 auf. Die Aufgabe des Halteelements 2 ist es die Einstellvorrichtung 1 an einer Stellschraube eines Verstellmechanismus zu halten. Hierfür weist das Haltelement 2 mindestens zwei Teile 2a, 2b auf. Die in Figur 1 gezeigte Ausführungsform ist eine Ausführungsform in der das Haltelement 2 genau zwei Teile 2a, 2b aufweist. Der Fachmann weiß aber, dass das Haltelement 2 ohne weiteres mit mehr als zwei Teilen realisiert werden kann.

Das Haltelement 2 weist an seiner Innenseite, d.h. an der Seite, die in Richtung der Stellschraube zeigt an der die Einstellvorrichtung gehalten werden soll, ein Profil auf. Dieses Profil bewirkt, dass sich das Halteelement 2 und somit auch die Einstellvorrichtung 1 bei einer Drehung der Stellschraube axial entlang der Stellschraube bewegt. Bei der in Figur 1 gezeigten Ausführungsform wird das Profil durch Gewindeelemente 7 gebildet.

In der in Figur 1 gezeigten Ausführungsform sind die beiden Teile 2a, 2b des Halteelements 2 über ein Verbindungselement 6 miteinander verbunden. Das Verbindungselement 6 hat in dieser Ausführungsform eine geringere Wanddicke als die zwei Teile 2a, 2b des Halteelements 2. Aufgrund dieses Verbindungselements können die zwei Teile 2a, 2b mit einem wesentlich geringeren Kraftaufwand voneinander weg und zueinander hin bewegt werden.

In der vorliegenden Ausführungsform weist die Einstellvorrichtung 1 zwei Bewegungsmittel 4, 5 auf. Jedes der zwei Bewegungsmittel 4, 5 ist an einem der beiden Teile 2a, 2b des Haltelements 2 angeordnet. Eine Bewegung des Bewegungsmittels 4, 5 führt zu einer Bewegung des Teils 2a, 2b an dem das Bewegungsmittel 4, 5 angeordnet ist. Das Bewegungsmittel 4, 5 kann dabei die Funktion eines Hebelarms haben.

In der in Figur 1 gezeigten Ausführungsform bilden die beiden Bewegungsmittel 4, 5 ein Übertragungselement 3. Mit dem Übertragungselement 3 wird die Bewegung der Stellschraube auf den Scheinwerfer übertragen. Zu diesem Zweck ist das Übertragungselement 3 derart ausgestaltet, dass ein Scheinwerfer bzw. ein Teil eines Scheinwerfers, wie zum Beispiel ein Tragrahmen, ein Reflektor oder eine Lichtquelle daran angeordnet werden kann.

Figur 2 zeigt einen Vertikalschnitt durch die in Figur 1 gezeigte Ausführungsform der Einstellvorrichtung 1. In dieser Ansicht ist insbesondere zu sehen, dass die Wanddicke des Verbindungselement 6 geringer ist als die Wanddicke der zwei Teile 2a, 2b.

Das Anordnen der Einstellvorrichtung in einem Verstellmechanismus für einen Scheinwerfer kann folgendermaßen ablaufen. Erfindungsgemäß wird zunächst mindestens ein Bewegungsmittel 4, 5 bewegt. Dieses Bewegungsmittel 4, 5 wird relativ zu dem Teil 2a, 2b des Haltelements 2 bewegt, an dem dieses Bewegungsmittel 4, 5 nicht angeordnet ist. Bei der vorliegenden Ausführungsform gibt es zwei Bewegungsmittel 4, 5, die beide bewegt werden können. In dem Fall können beide Bewegungsmittel 4, 5 zueinander hin bewegt werden.

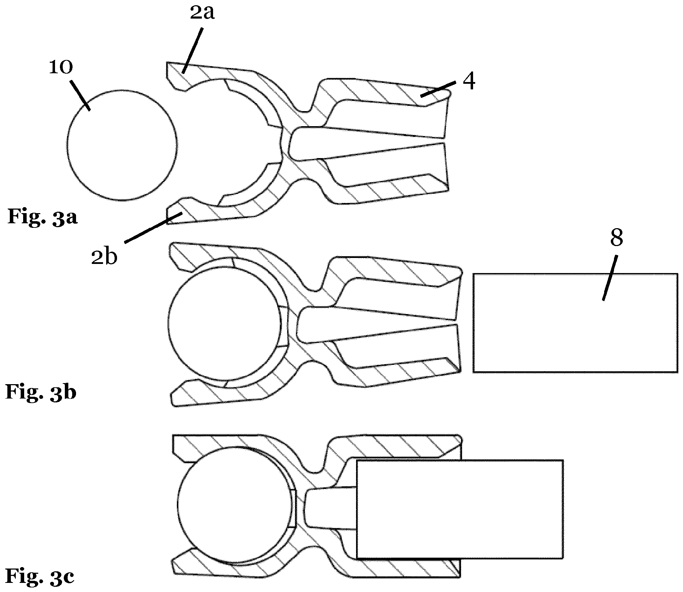

Dies ist in Figur 3a veranschaulicht. Durch das Bewegen - in diesem Fall - der zwei Bewegungsmittel 4, 5 werden die zwei Teile 2a, 2b des Halteelements voneinander weg bewegt. Dadurch kann das Einstellelement 1 mit geringerer mechanischer Belastung an der Stellschraube 10 angeordnet werden. Figur 3b zeigt die Einstellvorrichtung 1 mit zwischen den zwei Teilen 2a, 2b des Halteelements 2 angeordneter Stellschraube 10. Damit sich die Einstellvorrichtung 1 nicht von der Stellschraube 10 lösen kann, müssen die zwei Teile 2a, 2b wieder zueinander hin bewegt werden. Außerdem muss sichergestellt werden, dass sich die zwei Teile 2a, 2b während dem Betrieb der Einstellvorrichtung 1 nicht wieder voneinander weg bewegen. Zu diesem Zweck wird, wie in Figur 3b veranschaulicht, zwischen die zwei Bewegungsmittel 4, 5 ein Element 8 eines Scheinwerfers angeordnet. Dieses Element 8 sorgt zunächst dafür, dass die Bewegungsmittel 4, 5 wieder voneinander weg bewegt werden und somit die zwei Teile 2a, 2b des Halteelements 2 die Stellschraube 10 umfassen und somit die Einstellvorrichtung 1 an der Stellschraube 10 halten. Außerdem sorgt das Element 8 dafür, dass sich die beiden Bewegungsmittel 4, 5 nicht unbeabsichtigt während dem Betrieb wieder zueinander hin bewegen können, da sich dadurch gegebenenfalls die Einstellvorrichtung 1 von der Stellschraube 10 lösen würde.

Die in den Figuren gezeigte Ausführungsform ist nur ein Beispiel. Dem Fachmann ist bewusst, dass die Einstellvorrichtung 1, der Scheinwerfer und das entsprechende Verfahren auch mit anderen Mitteln realisiert werden kann.

## Patentansprüche

1. Eine Einstellvorrichtung (1) zum Einstellen einer Position eines Scheinwerfers, aufweisend:
ein Halteelement (2) zum Halten der Einstellvorrichtung (1) an einer Stellschraube (10) und ein Übertragungselement (3) zum Ändern der Position des Scheinwerfers in Abhängigkeit von der Position des Halteelements (2) an der Stellschraube (10),
wobei das Haltelement (2) mindestens zwei Teile (2a, 2b) aufweist, die relativ zueinander bewegbar sind und die die Querschnittsfläche der Stellschraube (10) zumindest teilweise umschließen können, und
wobei das Übertragungselement (3) mit zwei Bewegungsmitteln (4, 5) ausgestaltet ist, die jeweils an einem der mindestens zwei Teile (2a, 2b) des Halteelements (2) angeordnet sind und wobei die zwei Bewegungsmittel (4, 5) derart an den mindestens zwei Teilen (2a, 2b) angeordnet sind, dass durch eine Bewegung der zwei Bewegungsmittel (4, 5) zueinander hin, sich die mindestens zwei Teile (2a, 2b) voneinander weg bewegen, um das Halteelement (2) der Einstellvorrichtung (1) an der Stellschraube (10) anzuordnen, und dass sich die mindestens zwei Teile (2a, 2b) zueinander hin bewegen, damit die mindestens zwei Teile (2a, 2b) des Halteelements (2) die Einstellvorrichtung (1) an der Stellschraube (10) halten.

2. Die Einstellvorrichtung (1) gemäß Anspruch 1, wobei die mindestens zwei Teile (2a, 2b) des Halteelements (2) über ein Verbindungselement (6) miteinander verbunden sind.

3. Die Einstellvorrichtung (1) gemäß Anspruch 2, wobei das Verbindungselement (6) ein Filmscharnier ist.

4. Die Einstellvorrichtung (1) gemäß einem der Ansprüche 1 bis 3, wobei das Halteelement (2) mindestens ein Gewindeelement (7) aufweist.

5. Die Einstellvorrichtung (1) gemäß einem der Ansprüche 1 bis 4, wobei die Einstellvorrichtung (1) ein Sicherungsmittel aufweist, das ein unbeabsichtigtes Bewegen des mindestens einen Bewegungsmittels (4) in mindestens eine Richtung verhindert.

6. Die Einstellvorrichtung (1) gemäß Anspruch 1, wobei die zwei Bewegungsmittel (4, 5) derart ausgestaltet sind, dass ein Sicherungsmittel zwischen den zwei Bewegungsmitteln (4, 5) angeordnet werden kann, um eine Bewegung der beiden Bewegungsmittel (4, 5) zueinander hin zu verhindern.

7. Die Einstellvorrichtung (1) gemäß Anspruch 1, wobei die zwei Bewegungsmittel (4, 5) zumindest teilweise das Übertragungselement (3) bilden.

8. Die Einstellvorrichtung (1) gemäß Anspruch 7, wobei das Übertragungselement (3) mit den zwei Bewegungsmitteln (4, 5) derart ausgestaltet ist, dass das Übertragungselement (3) ein Element (8) des Scheinwerfers aufnehmen kann und dieses Element (8) des Scheinwerfers eine Bewegung der zwei Bewegungsmittel (4, 5) zueinander hin verhindert.

9. Die Einstellvorrichtung (1) gemäß einem der Ansprüche 1 bis 8, wobei die Einstellvorrichtung (1) aus Kunststoff besteht.

10. Die Einstellvorrichtung (1) gemäß einem der Ansprüche 1 bis 9, wobei an mindestens einem von den mindestens zwei Teilen (2a, 2b) mindestens eine Ausrichthilfe (9) angeordnet ist.

11. Ein Scheinwerfer mit einer Einstellvorrichtung (1) gemäß einem der Ansprüche 1 bis 10, wobei der Scheinwerfer ein Element (8) aufweist, das mit dem Übertragungselement (3) der Einstellvorrichtung (1) derart verbunden werden kann, dass ein Ändern der Position des Halteelements (2) der Einstellvorrichtung (1) an einer Stellschraube (10) ein Ändern der Position des Scheinwerfers bewirkt.

12. Verfahren zum Anordnen einer Einstellvorrichtung (1) in einem Verstellmechanismus für einen Scheinwerfer, wobei die Einstellvorrichtung (1) ein Halteelement (2) zum Halten der Einstellvorrichtung (1) an einer Stellschraube (10) und ein Übertragungselement (3) zum Ändern der Position des Scheinwerfers in Abhängigkeit von der Position des Halteelements (2) an der Stellschraube (10) aufweist, das Verfahren aufweisend:
Bewegen zumindest eines von zwei Bewegungsmitteln (4, 5) des Übertragungselements (3), die jeweils an einem von mindestens zwei Teilen (2a, 2b) des Halteelements (2) der Einstellvorrichtung (1) angeordnet sind derart, dass durch die Bewegung der zwei Bewegungsmittel (4, 5) zueinander hin sich die mindestens zwei Teile (2a, 2b) voneinander weg bewegen;
Anordnen des Haltelements (2) an der Stellschraube (10) des Verstellmechanismus;
Bewegen zumindest eines von den zwei Bewegungsmitteln (4, 5) derart, dass sich die mindestens zwei Teile (2a, 2b) zueinander hin bewegen; und
Verbinden des Übertragungselements (3) der Einstellvorrichtung (1) mit einem Element (8) des Scheinwerfers derart, dass ein Ändern der Position des Halteelements (2) der Einstellvorrichtung (1) an der Stellschraube (10) ein Ändern der Position des Scheinwerfers bewirkt.

## Claims

1. An adjusting device (1) for adjusting a position of a headlight, comprising:
a holding element (2) for holding the adjusting device (1) at an adjusting screw (10) and a transmission element (3) for changing the position of the headlight depending on the position of the holding element (2) at the adjusting screw (10), wherein the holding element (2) comprises at least two parts (2a, 2b) which are movable with respect to each other and which could at least partially enclose the cross-sectional area of the adjusting screw (10), and
wherein the transmission element (3) is provided with two moving means (4, 5), each of which is arranged at one of the at least two parts (2a, 2b) of the holding element (2) and wherein the two moving means (4, 5) are arranged at the at least two parts (2a, 2b) in such a way that by moving the two moving means (4, 5) towards each other the at least two parts (2a, 2b) move away from one another in order to arrange the holding element (2) of the adjusting device (1) at the adjusting screw (10), and such that the at least two parts (2a, 2b) move towards one another in order for the at least two parts (2a, 2b) of the holding element (2) to hold the adjusting device (1) at the adjusting screw (10).

2. The adjusting device (1) according to claim 1, wherein the at least two parts (2a, 2b) of the holding element (2) are connected to one another via a connecting element (6).

3. The adjusting device (1) according to claim 2, wherein the connecting element (6) is a film hinge.

4. The adjusting device (1) according to one of claims 1 to 3, wherein the holding element (2) comprises at least one thread element (7).

5. The adjusting device (1) according to one of claims 1 to 4, wherein the adjusting device (1) comprises a securing means which prevents an unintentional movement of the at least one moving means (4) in at least one direction.

6. The adjusting device (1) according to claim 1, wherein the two moving means (4, 5) are provided such that a securing means can be arranged between the two moving means (4, 5) in order to prevent a movement of the two moving means (4, 5) towards each other.

7. The adjusting device (1) according to claim 1, wherein the two moving means (4, 5) form at least partially the transmission element (3).

8. The adjusting device (1) according to claim 7, wherein the transmission element (3) with the two moving means (4, 5) is provided such that the transmission element (3) can receive an element (8) of the headlight and this element (8) of the headlight prevents a movement of the two moving means (4, 5) towards each other.

9. The adjusting device (1) according to one of claims 1 to 8, wherein the adjusting device (1) is made of plastic.

10. The adjusting device (1) according to one of claims 1 to 9, wherein at least one alignment aid (9) is arranged at at least one of the at least two parts (2a, 2b).

11. A headlight with an adjusting device (1) according to one of claims 1 to 10,
wherein the headlight comprises an element (8) which can be connected to the transmission element (3) of the adjusting device (1) such that a changing of the position of the holding element (2) of the adjusting device (1) at an adjusting screw (10) causes a changing of the position of the headlight.

12. A method for arranging an adjusting device (1) in an adjusting mechanism for a headlight, wherein the adjusting device (1) comprises a holding element (2) for holding the adjusting device (1) at an adjusting screw (10) and a transmission element (3) for changing the position of the headlight depending on the position of the holding element (2) at the adjusting screw (10), the method comprising:
moving at least one of two moving means (4, 5) of the transmission element (3), each of which is arranged at one of the at least two parts (2a, 2b) of the holding element (2) of the adjusting device (1), such that by moving the two moving means (4, 5) towards each other, the at least two parts (2a, 2b) move away from each other;
arranging the holding element (2) at the adjusting screw (10) of the adjusting mechanism;
moving at least one of the two moving means (4, 5) such that the at least two parts (2a, 2b) move towards each other; and
connecting the transmission element (3) of the adjusting device (1) to an element (8) of the headlight such that changing the position of the holding element (2) of the adjusting device (1) at the adjusting screw (10) causes a changing of the position of the headlight.

## Revendications

1. Un dispositif de réglage (1) pour régler une position d'un projecteur, comportant :
un élément de maintien (2), pour maintenir le dispositif de réglage (1) sur une vis de réglage (10), et un élément de transmission (3) pour modifier la position du projecteur en fonction de la position de l'élément de maintien (2) sur la vis de réglage (10),
l'élément de maintien (2) comportant au moins deux parties (2a, 2b) qui sont déplaçables l'une par rapport à l'autre et qui peuvent entourer au moins partiellement la surface de section transversale de la vis de réglage (10), et
dans lequel l'élément de transmission (3) est conçu avec deux moyens de déplacement (4, 5) qui sont disposés respectivement sur une des au moins deux parties (2a, 2b) de l'élément de maintien (2), et les deux moyens de déplacement (4, 5) sont disposés sur les au moins deux parties (2a, 2b) de façon que, du fait d'un déplacement des deux moyens de déplacement (4, 5) l'un vers l'autre, les au moins deux parties (2a, 2b) s'éloignent l'une de l'autre afin de disposer l'élément de maintien (2) du dispositif de réglage (1) sur la vis de réglage (10), et de façon que les au moins deux parties (2a, 2b) se déplacent l'une vers l'autre afin que les au moins deux parties (2a, 2b) de l'élément de maintien (2) maintiennent le dispositif de réglage (1) sur la vis de réglage (10).

2. Le dispositif de réglage (1) selon la revendication 1, dans lequel les au moins deux parties (2a, 2b) de l'élément de maintien (2) sont reliées l'une à l'autre par l'intermédiaire d'un élément de liaison (6).

3. Le dispositif de réglage (1) selon la revendication 2, dans lequel l'élément de liaison (6) est une charnière-film.

4. Le dispositif de réglage (1) selon une des revendications 1 à 3, dans lequel l'élément de maintien (2) comporte au moins un élément de filetage (7).

5. Le dispositif de réglage (1) selon une des revendications 1 à 4, dans lequel le dispositif de réglage (1) comporte un moyen de sécurité qui empêche un déplacement involontaire du au moins un moyen de déplacement (4) dans au moins une direction.

6. Le dispositif de réglage (1) selon la revendication 1, dans lequel les deux moyens de déplacement (4, 5) sont conçus de façon qu'un moyen de sécurité puisse être disposé entre les deux moyens de déplacement (4, 5) afin d'empêcher un déplacement des deux moyens de déplacement (4, 5) l'un vers l'autre.

7. Le dispositif de réglage (1) selon la revendication 1, dans lequel les deux moyens de déplacement (4, 5) forment au moins partiellement l'élément de transmission (3).

8. Le dispositif de réglage (1) selon la revendication 7, dans lequel l'élément de transmission (3) est conçu avec les deux moyens de déplacement (4, 5) de façon que l'élément de transmission (3) puisse recevoir un élément (8) du projecteur et que cet élément (8) du projecteur empêche un déplacement des deux moyens de déplacement (4, 5).

9. Le dispositif de réglage (1) selon une des revendications 1 à 8, dans lequel le dispositif de réglage (1) est constitué de matière synthétique.

10. Le dispositif de réglage (1) selon une des revendications 1 à 9, dans lequel au moins une aide à l'orientation (9) est disposée sur au moins une des d'au moins deux parties (2a, 2b).

11. Un projecteur avec un dispositif de réglage (1) selon une des revendications 1 à 10, dans lequel le projecteur comporte un élément (8) qui peut être relié à l'élément de transmission (3) du dispositif de réglage (1) de façon qu'une modification de la position de l'élément de maintien (2) du dispositif de réglage (1) sur une vis de réglage (10) provoque une modification de la position du projecteur.

12. Procédé de montage d'un dispositif de réglage (1) dans un mécanisme de réglage pour un projecteur, le dispositif de réglage (1) comportant un élément de maintien (2) pour maintenir le dispositif de réglage (1) sur une vis de réglage (10) et un élément de transmission (3) pour modifier la position du projecteur en fonction de la position de l'élément de maintien (2) sur la vis de réglage (10), le procédé comprenant :
le déplacement d'au moins un de deux moyens de déplacement (4, 5) de l'élément de transmission (3) qui sont disposés respectivement sur une d'au moins deux parties (2a, 2b) de l'élément de maintien (2) du dispositif de réglage (1) de façon que, du fait du déplacement des deux moyens de déplacement (4, 5) l'un vers l'autre, les au moins deux parties (2a, 2b) s'éloignent l'une de l'autre ;
la mise en place de l'élément de maintien (2) sur la vis de réglage (10) du mécanisme de réglage ;
le déplacement d'au moins un des deux moyens de déplacement (4, 5) de façon que les au moins deux parties (2a, 2b) se déplacent l'une vers l'autre ; et
la liaison de l'élément de transmission (3) du dispositif de réglage (1) avec un élément (8) du projecteur de façon qu'une modification de la position de l'élément de maintien (2) du dispositif de réglage (1) sur la vis de réglage (10) provoque une modification de la position du projecteur.
